# EUROPEAN PATENT APPLICATION

(11) **EP 1 944 334 A1**
(43) Date of publication of application: **16.07.2008**
(21) Application number: 08150263.5
(22) Date of filing: 15.01.2008
(51) Int. Cl.: C08J 9/14, C08G 18/10, C08G 18/20, C08G 18/48, C08K 3/00

(54) **Pressurised container containing a foaming composition for elastic foam**

(30) Priority: 15.01.2007 EP 07100537
(71) Applicant: SOUDAL, 2300 Turnhout (BE)
(72) Inventor: Dirckx, Veerle, 3270, Scherpenheuvel (BE); Geboes, Peter, 2630, Aartselaar (BE)
(74) Representative: Luys, Marie-José A.H.

(57) **Abstract**

The present invention relates to a cured polymer foam containing at least 70 % of open cells and having an elastic recovery of at least 70 %, preferably at least 80%, more preferably at least 90 % after 50 % of compression. The polymer foam is preferably a cured polyurethane foam or a silane terminated foam.

## Description

Polymer foams have been widely used in the art as insulation materials in moist environments, as sealants, adhesives and air barrier materials in door and window installation industry. In practice, in particular one-component foamable prepolymer systems can easily be directed into the rough openings left between a fenestration and surrounding construction walls. Polymer foams are available as one-component, two-component or so called 1.5 component systems. These formulations usually are foamable mixtures containing a prepolymer (silane or NCO end capped), blowing agents and auxiliary components, which are stored under pressure and produce a foam when dispensed from the pressurised storage container.

US2004024077 discloses one-component compositions for producing a moisture cured polyurethane foam with an open cell content of between 60 and 95 percent. The one-component system disclosed by US2004024077 solves the problem that the known foams exert excessive foaming pressure to the window frames, which often results in extensive distortion of the window frames along their perimeters. After having been dispensed, a foam often shows post expansion, which produces a force sufficient to cause fenestration frame deflection. To solve this problem a one-component system has been developed which produces open cell polyurethane foam wherein the foaming pressure is less than 11 kPa (1.6 psi) when measured in a simulated rough-opening cavity. This one-component foam forming composition comprises a mixture of
(a) prepolymers containing 12-17 wt. % of free isocyanate groups based on reactive components in the foamable composition, which is produced by reacting a polyisocyanate with a polyol blend comprising a first polyol that has functionality from 2 to 4 and having a molecular weight from 500 to 3000 and a second polyol that has a functionality of from 2 to 4 and a molecular weight of from 500 to 12,000 wherein the first to second polyol are present in a parts by weight ratio of form 1:6 to 1:2;
(b) usual adjuvants for polyurethane foams; and
(c) a blowing agent.
The composition may further contain 0.5-4 wt. % of a polysiloxane polyoxyalkylene surfactant.

DE10108443 and DE 10108445 describe that elastic foams can be formulated when using long chain polyols. Such formulations can indeed give rise to a longer elongation. DE10108443 mentions as characteristic parameters of the foam: density, tear resistance, elongation at break, dimensional stability. The elastic recovery is not discussed. However, in practice the parameter 'Elastic Recovery' has been found a much more important parameter than 'elongation at break', when expressing the 'elasticity' of a foam. Indeed it is known that although some products have a higher elongation at break value, they behave as 'plastic' rather than as 'elastic' materials, which is undesirable for longer term performance in moving joints. Typical joints give rise to 2 types of movements: elongation and compression. Depending on environmental, external factors (seasons, day and night, temperature, humidity, wind,... ) and thermal expansion of the material, joints will move to a larger or smaller extent. Besides this, the type of movement of a joint also depends on the conditions prevailing when filling the joint , for example in dry and cold conditions joints tend to be bigger, as compared to warm and humid conditions.

It is therefore an object of the present invention to provide a composition which, when dispensed, results in a foam with improved elastic recovery.

This is achieved according to the present invention with a composition showing the technical features of the characterizing part of the first claim

Thereto the foam of the present invention is characterized in that it contains at least 70 % of open cells and has an elastic recovery of at least 70 %, preferably at least 80%, more preferably at least 90 % after 50 % of compression. The elastic recovery is determined according to DIN EN ISO 1856:2000, after 50% compression of the cured foam. The amount of open cells is determined according to ASTM D6226.

Due to the combination of the presence of at least 70 % of open cells and an elastic recovery of at least 70 %, the foam of this invention presents excellent accoustic and thermal insulation properties without requiring the presence of an additional sealant on top of the foam. These properties are maintained in time, in contrast with (semi-) rigid foams. With the polymer foam of this invention the integrity of a joint sustains on the long term, even after relatively big joint-movements. This is attributed to the excellent 'moving abilities' of the foam, its good adhesion and lack of shrinkage.

A preferred embodiment of the cured foam of this invention contains at least 80% of open cell, preferably at least 90 %. Another preferred embodiment of the cured foam of this invention has an elastic recovery after 75% compression of at least 70%, preferably at least 80%, more preferably at least 90%.

ASTM D6226 covers cellular plastics, which are composed of membranes or walls of polymer separating small cavities or cells. These cells may be interconnecting (open cell), non-connecting (closed cell), or any combination of these types. This test method determines numerical values for open cells. It is a porosity determination, measuring the accessible cellular volume of a material. The remaining volume is that occupied by closed cells and cell walls. The standard technique used (by the UItraFoamTM) pycnometer is that of gas expansion from a calibrated sample chamber into a reference volume. The solid and closed cell volume of the sample is calculated from the relationship of the calibrated cell volumes and the pressures before and after expansion. The closed cell percentage is calculated from the solid volume and the measured geometric volume of a rectangular or cylindrical sample. Open cell % is calculated by difference (open cell % = 100% - closed cell %). Density is calculated from mass (weight)/volume and is reported as grams/cm³. In ASTM D6226, a corrected percentage of open cells is estimated by remeasuring the volume of a cube *after sectioning into eight parts.* The UltraFoam pycnometer programming provides a convenient way to automate this procedure. The printed report then gives both the Open Cell % and the Corrected Open Cell % values.

The measurement of the elastic recovery is carried out according to DIN EN ISO 1856:2000, which measures the difference between the initial and final thickness of a bar shaped foam part after deformation when subjected to pressure at a certain temperature and time. The foam part is positioned between two parallel plates, compressed for 50%, respectively 75% and left for 72 hours. Thereafter the thickness is measured again. The elastic recovery is determined as follows: 100 x (d°- d^{r})/d°, in which d° is the initial thickness and d^{r} is the thickness after compression.

Another preferred embodiment of the cured foam of this invention is characterized in that the foam has a compression strength at 10% compression (according to DIN 53421) of below 3 N/cm², more preferably below 1.5 N/cm², most preferably below 0.5 N/cm². The compression strength is measured by positioning a cube of the material having the following dimensions : 50 x 50 X 50 cm, at a central position between two parallel pressure plates, and by moving the plates towards each other at a constant velocity of 10% per minute, with respect to the original height of the probe. The force exerted to achieve compression is measured as a function of height change of the cube. The compression strength σ_{dB} = Fₘₐₓ/Aₒ. Herein Fₘₐₓ is the maximum force in N when measuring the force as a function of the compression of the probe, and is the initial surface area in mm² of the probe.

The cured foam of this invention presents the advantage that it has a good dimensional stability (according to SKZ S.P. 7.2 - 3.2.6). In practice this means that the foam has a shrinkage below 25%, more preferably < 10% and most preferably < 5%.

Within the framework of this invention a material with improved elastic recovery means a material, which when released after having been compressed or stretched, takes its original volume and shape to a major extent. The product of the present invention has been found to show extreme high values in terms of elastic recovery, both after stretching and compression. This makes the product ideally suited in those conditions where there is a substantial joint movement and therefore this product is capable of maintaining long term integrity towards all kinds of insulation.

The cured polymer foam of this invention is preferably a cured polyurethane foam or a cured silane terminated foam.

The cured foam of the present invention is obtained by dispensing a foam forming composition containing
(a) at least one prepolymer containing free isocyanate groups in the range of 7 to 15 percent by weight, based on reactive components in the foamable composition, which is produced by reacting a polyisocyanate with a polyol blend or at least one prepolymer containing silane moisture curable end groups
(b) usual adjuvants (flame retardant, plasticiser, stabiliser, cell opener, catalyst, silanes) and
(c) a blowing agent.
Preferably the polyol has an average molecular weight of 400 to 4500 and a functionality between 2 and 4, preferably between 2 and 3.
When dispensed from the container, the frothed prepolymer reacts with atmospheric moisture to form a foam having at least 70 percent of open cells, more preferably 80 percent and most preferably 90 percent of open cells.

The composition of the present invention may either be a one or two component formulation or a so-called 1.5 component system. In the case of the one-component formulations, the moisture reactive groups of the dispensed prepolymer cure by reaction with atmospheric moisture. This reaction is usually accompanied by cross-linking and an increase in volume. In case of 2-component systems, chemical curing is achieved via reaction of the reactive groups with the second reactive component (mostly amines, water or hydroxyfunctional molecules). With so-called 1.5 component foams a hydroxy or amine component or a mixture thereof is added to the prepolymer before being dispensed in such an amount that full or partly conversion of all moisture reactive groups is achieved. Further moisture curing (if needed) is achieved after dispensing.

Suitable prepolymer compositions for the foams may contain NCO- or silane terminated components, the latter being moisture curable. The silane terminated component can be based on a backbone of polyether or polyurethane and the reactive end groups can be dimethoxy, trimethoxy, diethoxy or triethoxy, in alpha or gamma position. Most preferred is the alkoxy in alpha position with respect to the organofunctional group. The NCO-terminated component contains prepolymers which contain a minimum amount of reactive terminal NCO groups and are obtained by reacting an alcohol with an excess of isocyanates, usually polyisocyanates, which results in 7 to 15 percent free NCO, preferably 9 to 10 percent free NCO. Care should be taken that the resulting prepolymer has a viscosity which is appropriate for the intended application. The composition of the present invention is made by combining one or more polyols and the usual additives (such as catalyst, chain extender, flame retardant, plasticiser, cell opener, surfactants, colorants) to form a premix. Mixing of this polyol blend with an excess of isocyanate gives the prepolymer formation. Finally an acceptable blowing agent is introduced into the mixture to aid in forming the cell structure of the foam.

Suitable isocyanates for use in the present invention are polyisocyanates (aliphatic, cycloaliphatic, aryliphatic, aromatic...) that are produced for example by BAYER, BASF/ELASTOGRAN, HUNTSMAN, ONGRO, etc with tradenames like respectively Desmodur, Lupranate, Suprasec, Ongronate, isophorondiisocyanate (IPDI), toluendiisocyanate (TDI), 1,5-diisocyanatonaphthalene (NDI), tri-iso-cyanatotrimethylmethane, 1,6-diisocyanatohexane (HDI), and 2, 4 or 4, 4'-di-isocyanatodiphenylmethane (MDI). All these isocyanates, their isomers or derivatives (e.g. biurete and allophanate adducts) can be used as such or as a combination thereof. Preferably aromatic diisocyanates 4,4'-, 2,4'- and 2,2'-diphenylmethane diisocyanates, polymethylene polyphenyl isocyanates, mixtures of 4,4'-, 2,4'- and 2,2'-diphenylmethane diisocyanates and polymethylene polyphenyl isocyanates (Polymeric MDI, PMDI), and mixtures are used. The isocyanates may be modified as would be readily understood by those skilled in the field of polyurethane foam chemistry, so long as the selected isocyanates react with the polyol or polyol blend to create a final foam product that has the properties of the present invention.

Suitable polyols for use in the present invention are polyether or polyester polyols known for the production of polyurethane elastomeric adhesives and sealants, rigid, semi-rigid, flexible and froth foams. The polyether/polyester polyols may also contain amine groups. The polyol has an average molecular weight of 400 to 4500 and a functionality of from 2 to 4, preferably from 2 to 3. Preferably the foam forming composition of this invention contains one single polyol, although a mixture of two or more different polyols may be used as well.

The foam forming composition further comprises a catalyst, such as an amine catalyst, to accelerate the reaction of the compounds in the mixture containing reactive hydrogen atoms and isocyanate groups in the phase of prepolymer formation, and to accelerate the moisture curing reaction after the reaction mixture is extruded. The amine catalyst may comprise a primary, secondary or tertiary amine, with tertiary amine catalysts being particularly preferred. Examples of suitable catalysts are dimethylethanol amine (DMEA), tetramethyliminobispropyl amine (Polycat 15), N,N-dimethylcyclohexyl amine (DMCHA), tetraethylenediamine (Dabco/TEDA), organometallic compounds such as tin mercaptide, dibuyltin dilaurate (DBTDL), etc. Most preferably, the amine catalyst is a dimorpholine compound such as dimorpholinopolyethylene glycol (PC Cat 1 KSC), 2,2'-dimorpholinodiethylether (DMDEE), with 2,2'-dimorpholinodiethylether being particularly preferred. The dimorpholine catalysts are preferably present in the compound of the present invention in an amount of from 0.3 to 0.90 parts by weight, and most preferably 0.45 to 0.7 parts by weight. The silane endcapped prepolymers can also be catalysed by acids or acid salts.

The foam forming composition of the present invention preferably contains an amount of at least one cell opener. Suitable cell openers include paraffin or silicon oils, silicone-free polymers based on polyvinyl alkyl ether with a foam-inhibiting effect for example BYK-051, -052 and -053 from BYK-Chemie GmbH, silicon-containing polymers like Tegostab B-8871, Tegostab B-8934, Tegostab 8935, Niax L-6164, Struksilon 8101, Struksilon 8002, available from resp. Goldschmidt, GE Silicones, Schill & Seilacher. Mechanical cell opening can be achieved by incorporating solids, for example talcums, calcium carbonates, etc. Defoaming additives in low levels are also possible. The cell opening additives are added in quantities of 0.01 to 2, preferably 0.1 to 1 wt % (as such or as combinations thereof), based on the prepolymer component.

The prepolymer preferably also comprises at least one surfactant. The surfactants provide stability to the foam's cell structure during dispensing, curing and post-expansion processes, which occur as a result of CO2 generated by the reaction of the free isocyanate with atmospheric moisture. The surfactants further assist in the control of the open cell to closed cell ratio that, in turn, provide dimensional stability and affect the foaming pressure of the final cured foam. Examples of commercially available polysiloxane polyoxyalkylene surfactants suitable for use in the present invention include, without limitation, those typically used in polyurethane (rigid, flexible semi-rigid) polyurethane foam applications such as those supplied by AIR PRODUCTS, GOLDSCHMIDT, SCHILL & SEILACHER, BYK CHEMIE, GE SILICONES, etc. The surfactants are present in the composition mixture of the present invention in an amount of 0.5 to 4.0 parts by weight, preferably 1 to 3; and more preferably about 1 part by weight.

The foam foaming composition of the present invention may also contain one or more flame retardants. Useful flame retardants include, without limitation, any compound with flame suppression properties that can be dissolved or dispersed in the polyurethane foam. These include compounds such as chlorinated or brominated phosphates, phosphonates, inorganic oxides and chlorides, red phosphor, expandable grafite. Preferably, the flame retardant is a soluble liquid such as triethyl phosphonate, pentabromodiphenyl oxide, and most preferably is tris(2-chloro isopropyl) phosphate (TCPP). The flame retardants are preferably present in the prepolymer in an amount of from 10 to 40 parts by weight.

The foam forming composition mixture may be formulated such that the foamed product may be made to cure to any useful color or shade as would be readily apparent to one skilled in the field of polyurethane foam formulations. Colorants may be used.

Additional reactive components can be added to the foam forming composition such as silyl-terminated substances, which are compatible yet do not react in the can with the prepolymer polyurethane product. These, however, will also moisture cure independently once dispensed from the container thus producing an interpenetrating polymeric network. Such formulations have also been found to exhibit exceptional properties and suitable open cell contents.

Once the polyisocyanate and polyol blend are combined in the recipient or once the prepolymer composition is added into the recipient, usually a pressurizable container such as a metal aerosol can, the can is sealed with an aerosol valve prior to introducing a blowing agent. This blowing agent dissolves partly into the mixture and acts to pressurize the container and form the cell structure of the moisture-cured foam. Useful blowing agents preferably include physical blowing agents. Such physical blowing agents are preferably gases that are inert towards the prepolymer composition.Such blowing agents preferably have high vapor pressures and low boiling points (from -70°C to 30°C at atmospheric pressure, so that they evaporate and form the cell structure after the foam is dispensed. Examples of suitable blowing agents include alkanes, alkenes, cycloalkanes, dialkylethers, cycloalkylene ethers and ketones, halogenated hydrocarbons and decomposition products, or NₓO, COₓ. Most preferred for the compositions of the present invention is an isobutane/propane/dimethylether mixture

Once the reaction in the pressurised container is complete (usually about 24 hours), or once the propellants have been properly mixed into the prepolymer, a dispenser is then attached to the valve on the container. Upon activating the valve the composition is released from the container and delivered through the dispenser. The prepolymer reacts with atmospheric moisture to form an open-cell polyurethane foam structure of at least 70, preferably 90 percent open-cells.

The foam of this invention is suitable for use in filling, sealing, joining, damping, insulating, waterproofing, protecting against fire, constructing or assembling between, around or into materials as well as for freely extruded volumes in applications for construction, hobby, home improvement, entertainment, agriculture, safety or protection, packaging, decoration, industrial assembly, marine, sealife, automotive, mining, aeronautics or aerospace environments

The invention is further illustrated in the example and comparative example below.

### Example.

**TABLE:**

| % compression | T | Elastic Recovery (ISO 1856) conventional rigid or semi riged foam from a pressurized container * | Elastic Recovery (ISO 1856) inventive formulation** |
|---|---|---|---|
| 10 % | 20°C | 90-95 | > 99.5% |
| 50 % | 20°C | Cells crushed | 94% |
| 75 % | 20°C | Cells crushed | 92% |

| | | | |
|---|---|---|---|
| *: e.g. SOUDAFOAM ** foam forming composition according to the invention: Polyolblend: 45% triol polyether with MW 1050, 50% TCPP, 3% stabiliser/cell opener (Struksilon B8002/Niax L-6164), 1% catalyst (DMDEE). The prepolymer: 58 gr polyolblend + 42 gr PMDI resulting in 9.7% NCO (%w/w). Pressurized can: 643 gr prepolymer + 120 gr propane /isobutane/DME | | | |

## Claims

1. A cured polymer foam containing at least 70 % of open cells and having an elastic recovery of at least 70 % after 50 % of compression.

2. The polymer foam of claim 1, **characterized in that** the foam contains at least 80 % of open cells, preferably at least 90 %.

3. The polymer foam of claim 1 or 2, **characterized in that** the foam has an elastic recovery of at least 95 % after 50% of compression.

4. The polymer foam according to any one of claims 1-3, **characterized in that** the foam has a compression strength at 10% compression below 3 N/cm², more preferably below 1.5 N/cm², most preferably below 0.5 N/cm.

5. The polymer foam according to any one of claims 1-4, **characterized in that** the foam has an elastic recovery after 75% compression of at least 70%, preferably at least 80%, more preferably at least 90%.

6. The polymer foam according to any one of claims 1-5, **characterized in that** the foam has a shrinkage below 25%, more preferably < 10% and most preferably < 5%.

7. The polymer foam according to any one of claims 1-6, **characterized in that** the foam is a cured polyurethane foam or a cured silane terminated foam.

8. A foam forming composition for producing the polyurethane foam of any one of claims 1-7, **characterized in that** the composition contains
(a) prepolymers containing 7-15 wt. % of free isocyanate groups based on reactive components in the foamable composition, which is produced by reacting a polyisocyanate with a polyol having an average molecular weight of 400 to 4500 and a functionality between 2 and 4, preferably between 2 and 3.
(b) usual adjuvants for polyurethane foams; and
(c) a blowing agent.

9. The foam forming composition as claimed in claim 8, **characterized in that** the composition is a one-component foam forming composition, a two-component foam forming composition or a 1.5 component foam forming composition.

10. The foam forming composition as claimed in claim 8 or 9, **characterized in that** the prepolymer contains at least one isocyanate terminated polyurethane or at least one silane-terminated polymer, which is moisture curable.

11. The foam forming composition according to claim 10, **characterized in that** the isocyanate terminated polyurethane system can be based on isophorondiisocyanate (IPDI), toluendiisocyanate (TDI), 1,5-diisocyanatonaphthalene (NDI), tri-iso-cyanatotrimethylmethane, 1,6-diisocyanatohexane (HDI), and 2,4- or 4, 4'-di-isocyanatodiphenylmethane (MDI) or on their isomers or polymers or on combinations.

12. The foam forming composition according to claim 11, **characterized in that** the isocyanate terminated polyurethane is a 4,4'-di-isocyanatodiphenylmethane (MDI) terminated polyurethane.

13. The foam forming composition according to any one of claims 8-12, **characterized in that** silane terminated polymer has a polyether or polyurethane backbone.

14. The foam forming composition of claim 13, **characterized in that** the silane terminated polymer contains dimethoxy, trimethoxy, diethoxy or triethoxy reactive end groups, in 'alpha' or 'gamma' position.

15. The foam forming composition of any one of claims 8-14, **characterized in that** the composition contains an amount of at least one plasticizer selected from the group of a phosphate, a phosphonate, a phtalate or a chloroparaffin.

16. The foam forming composition of claim 15, **characterized in that** TCPP, tris(2-chloro isopropyl) phosphate is contained in the foam forming composition as a plasticizer.

17. The foam forming composition of any one of claims 8-16, **characterized in that** the composition contains an amount of at least one blowing agent which is a hydrocarbon, dialkylether or a(hydro)fluorocarbon, or a mixture of two or more thereof.

18. A container, e.g. a pressurised container, pressurised can, cartridge or foil bag, containing the foam forming composition of any one of claims 8 - 17 for producing the polymer foam of any one of claims 1-7.
